(19) Europäisches Patentamt
European Patent Office
Office européen des brevets

(11) **EP 4 390 450 A1**

(12) **EUROPEAN PATENT APPLICATION**
published in accordance with Art. 153(4) EPC

(43) Date of publication:
**26.06.2024   Bulletin 2024/26**

(21) Application number: **22887451.7**

(22) Date of filing: **18.10.2022**

(51) International Patent Classification (IPC):
*G01S 7/484* (2006.01)        *G01S 7/497* (2006.01)
*G01S 17/86* (2020.01)        *H04N 23/60* (2023.01)
*G03B 13/20* (2021.01)        *G03B 13/36* (2021.01)
*G06F 1/16* (2006.01)         *G02B 27/01* (2006.01)

(52) Cooperative Patent Classification (CPC):
G01S 7/4865; G01S 7/484; G01S 7/4863;
G01S 7/4868; G01S 7/497; G01S 17/10;
G01S 17/50; G01S 17/86; G01S 17/894;
G02B 27/01; G03B 13/20; G03B 13/36; G06F 1/16;
H04N 23/60

(86) International application number:
**PCT/KR2022/015781**

(87) International publication number:
**WO 2023/075255 (04.05.2023 Gazette 2023/18)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **25.10.2021   KR 20210142940**

(71) Applicant: **Samsung Electronics Co., Ltd.
Suwon-si, Gyeonggi-do 16677 (KR)**

(72) Inventors:
• **YUN, Juhwan
  Suwon-si Gyeonggi-do 16677 (KR)**
• **JEON, Jina
  Suwon-si Gyeonggi-do 16677 (KR)**

(74) Representative: **Nederlandsch Octrooibureau
P.O. Box 29720
2502 LS The Hague (NL)**

(54) **ELECTRONIC APPARATUS INCLUDING LIDAR SYSTEM AND METHOD FOR CONTROLLING ELECTRONIC APPARATUS**

(57)    An electronic device includes a light detection and ranging (LiDAR) system including an Rx sensor including autofocus pixels distributed among image pixels for sensing image information. The LiDAR system also includes a Tx light source configured to output a pulse laser. A processor calculates a distance between the LiDAR system and a subject using the autofocus pixels included in the Rx sensor and drives the Tx light source based on the distance. The processor adaptively determines the transmission power of the Tx light source based on the distance to the subject, and controls the Tx light source to output a pulse laser according to the transmission power.

FIG. 4

EP 4 390 450 A1

**Description**

<u>CROSS-REFERENCE TO RELATED APPLICATIONS</u>

This application is a national stage application of International Application No. PCT/KR2022/015781 designating the United States, filed on October 18, 2022, in the Korean Intellectual Property Receiving Office and claiming priority to Korean Patent Application No. 10-2021-0142940, filed on October 25, 2021, in the Korean Intellectual Property Office, the disclosures of which are incorporated by reference herein in their entireties.

<u>BACKGROUND</u>

1. <u>Field</u>

The disclosure relates to an electronic device including a light detection and ranging (LiDAR) system, and a method of controlling the electronic device.

2. <u>Description of Related Art</u>

An augmented reality (AR) device is a device that provides virtual information in addition to and based on reality and may provide virtual reality by displaying a virtual image overlaid on an image or background of the real world. The AR device may implement location tracking or three-dimensional (3D) mapping by recognizing the movement of a surrounding environment and a subject and may be utilized for an interface through gesture recognition. In addition, light detection and ranging (LiDAR) may sense the subject and map the distance or recognize the gesture of the subject by measuring a feature of a carrier signal reflected from the subject with an optical pulse.

<u>SUMMARY</u>

Embodiments may provide a light detection and ranging (LiDAR) system for sensing a subject by transmitting a determined transmission power based on a specified distance without considering a variable distance to the subject. In an example in which a fixed transmission power determined regardless of the distance is transmitted, when the distance to the subject is short, an unnecessary transmission power loss may occur, and when the distance to the subject is long, it may be impossible to recognize the subject due to a lack of transmission power.

According to one embodiment, by adaptively determining a transmission power of a LiDAR system based on the distance to a subject, the subject may be recognized by increasing the transmission power when the distance to the subject is long, and the subject may be recognized with relatively low power by reducing the transmission power of the LiDAR when the distance to the subject is short.

According to one embodiment, the current consumption of an electronic device including a LiDAR system may be reduced.

According to one embodiment, an electronic device may include a LiDAR system including an Rx sensor including autofocus pixels distributed in image pixels configured to sense image information, a Tx light source configured to output a pulse laser, and a processor configured to calculate a distance to a subject using the autofocus pixels included in the Rx sensor before the Tx light source is driven, to adaptively determine the transmission power of the Tx light source based on the distance to the subject, and to control the Tx light source to output a pulse laser according to the transmission power.

According to one embodiment, a wearable electronic device may include an Rx sensor including autofocus pixels distributed in image pixels configured to sense image information including a plurality of image frames, a Tx light source configured to output a pulse laser, a processor configured to calculate a distance to a subject using the autofocus pixels included in the Rx sensor before the Tx light source is driven, to adaptively determine the transmission power of the Tx light source based on the distance to the subject, to control the Tx light source to output a pulse laser according to the transmission power, and to generate virtual content based on the image information and the distance to the subject, and a display configured to display the virtual content.

According to one embodiment, a LiDAR system may include a Tx light source configured to output a pulse laser, and an Rx sensor configured to receive pulse signals reflected by the pulse laser from the subject. The Rx sensor may include autofocus pixels configured to acquire autofocus images distributed in image pixels configured to sense image information and may calculate a distance to the subject based on disparity among the autofocus images.

According to one embodiment, a method of controlling an electronic device including an Rx sensor and a Tx light source may include calculating a distance to the subject using autofocus pixels included in the Rx sensor before driving the Tx light source, adaptively determining a transmission power of the Tx light source based on the distance to the subject and controlling the Tx light source to output a pulse laser according to the transmission power.

According to one embodiment, a LiDAR system may calculate a distance to a subject using autofocus pixels.

According to one embodiment, an electronic device may extend coverage by increasing transmission power despite a long distance to a subject.

According to one embodiment, an electronic device may prevent an unnecessary transmission power loss by reducing the transmission power of a LiDAR when the distance to a subject is short.

According to one embodiment, an electronic device may reduce power consumption and improve the performance of a LiDAR by adaptively determining the transmission power of the LiDAR based on the distance to a subject.

BRIEF DESCRIPTION OF THE DRAWINGS

The above and other aspects, features, and advantages of certain embodiments of the present disclosure will be more apparent from the following detailed description, taken in conjunction with the accompanying drawings, in which:

FIG. 1 is a block diagram illustrating an example electronic device in a network environment according to one embodiment;
FIG. 2 is a diagram illustrating a general operation of light detection and ranging (LiDAR) system;
FIG. 3 is a diagram illustrating an operation performed when a transmission power of a LiDAR system is fixed;
FIG. 4 is a diagram illustrating a structure of a LiDAR system according to one embodiment;
FIG. 5 is a block diagram of an electronic device including a LiDAR system according to one embodiment;
FIG. 6 is a diagram illustrating a method of calculating a distance to a subject in an electronic device including a LiDAR system according to one embodiment;
FIG. 7 is a diagram illustrating a phase difference of autofocus images in an in-focus state, a front-focus state, and a back-focus state according to one embodiment;
FIG. 8 is a diagram illustrating a method of calculating a distance to a subject based on a phase difference according to one embodiment;
FIG. 9 is a diagram illustrating an example of a transmission power of a Tx light source adaptively determined in an electronic device according to one embodiment;
FIG. 10 is a block diagram illustrating a wearable electronic device according to one embodiment; and
FIG. 11 is a flowchart illustrating a method of controlling an electronic device according to one embodiment.

DETAILED DESCRIPTION

Hereinafter, embodiments will be described in greater detail with reference to the accompanying drawings. When describing the embodiments with reference to the accompanying drawings, like reference numerals refer to like elements and a repeated description related thereto will be omitted.

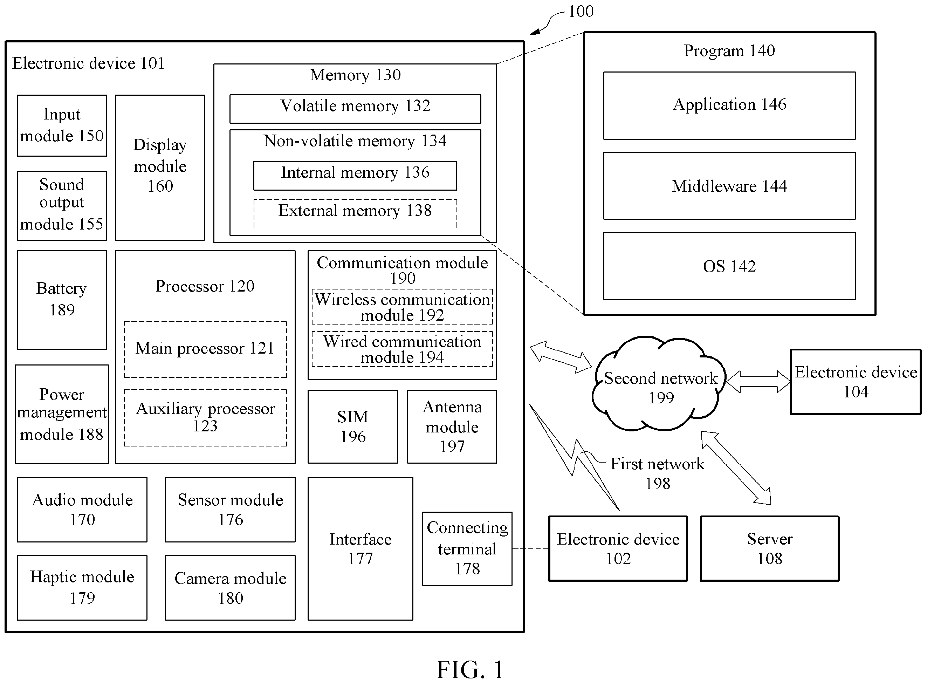

FIG. 1 is a block diagram illustrating an electronic device 101 in a network environment 100 according to one embodiment. Referring to FIG. 1, the electronic device 101 in the network environment 100 may communicate with an electronic device 102 via a first network 198 (e.g., a short-range wireless communication network), or communicate with at least one of an electronic device 104 or a server 108 via a second network 199 (e.g., a long-range wireless communication network). According to one embodiment, the electronic device 101 may communicate with the electronic device 104 via server 108. According to one embodiment, the electronic device 101 may include any one or any combination of a processor 120, a memory 130, an input module 150, a sound output module 155, a display module 160, an audio module 170, and a sensor module 176, an interface 177, a connecting terminal 178, a haptic module 179, a camera module 180, a power management module 188, a battery 189, a communication module 190, a subscriber identification module (SIM) 196, and an antenna module 197. In some embodiments, at least one (e.g., the connecting terminal 178) of the above components may be omitted from the electronic device 101, or one or more other components may be added in the electronic device 101. In some embodiments, some (e.g., the sensor module 176, the camera module 180, or the antenna module 197) of the components may be integrated as a single component (e.g., the display module 160).

The processor 120 may execute, for example, software (e.g., a program 140) to control at least one other component (e.g., a hardware or software component) of the electronic device 101 connected to the processor 120 and may perform various data processing or computation. According to one embodiment, as at least a part of data processing or computation, the processor 120 may store a command or data received from other components (e.g., the sensor module 176 or the communication module 190) in a volatile memory 132, process the command or the data stored in the volatile memory 132, and store resulting data in a non-volatile memory 134. According to one embodiment, the processor 120 may include a main processor 121 (e.g., a central processing unit (CPU) or an application processor (AP)) or an auxiliary processor 123 (e.g., a graphics processing unit (GPU), a neural processing unit (NPU), an image signal processor (ISP), a sensor hub processor, or a communication processor (CP)) that is operable independently of, or in conjunction with the main processor 121. For example, when the electronic device 101 includes the main processor 121 and the auxiliary processor 123, the auxiliary processor 123 may be adapted to consume less power than the main processor 121 or to be specific to a specified function. The auxiliary processor 123 may be implemented separately from the main processor 121 or as a part of the main processor 121.

The auxiliary processor 123 may control at least some of the functions or states related to at least one (e.g., the display module 160, the sensor module 176, or the communication module 190) of the components of the electronic device 101, instead of the main processor 121 while the main processor 121 is in an inactive (e.g., sleep) state or along with the main processor 121 while the main processor 121 is an active state (e.g., executing an application). According to one embodiment, the auxiliary processor 123 (e.g., an ISP or a CP) may be implemented as a portion of another component (e.g., the camera module 180 or the communication module 190) that is functionally related to the auxiliary processor 123. According to one embodiment, the auxiliary processor 123 (e.g., an NPU) may include a hardware structure specified for artificial intelligence model processing. An artificial intelligence model may be generated by machine learning. Such learning may be performed by, for example, the electronic device 101 in which artificial intelligence is performed, or performed via a separate server (e.g., the server 108). Learning algorithms may include, but are not limited to, for example, supervised learning, unsupervised learning, semi-supervised learning, or reinforcement learning. The artificial intelligence model may include a plurality of artificial neural network layers. An artificial neural network may include, for example, a deep neural network (DNN), a convolutional neural network (CNN), a recurrent neural network (RNN), a restricted Boltzmann machine (RBM), a deep belief network (DBN), and a bidirectional recurrent deep neural network (BRDNN), a deep Q-network, or a combination of two or more thereof, but is not limited thereto. The artificial intelligence model may additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored as software in the memory 130 and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output a sound signal to the outside of the electronic device 101. The sound output module 155 may include, for example, a speaker or a receiver. The speaker may be used for general purposes, such as playing multimedia or playing record. The receiver may be used to receive an incoming call. According to one embodiment, the receiver may be implemented separately from the speaker or as a part of the speaker.

The display module 160 may visually provide information to the outside (e.g., a user) of the electronic device 101 (e.g., a user). The display module 160 may include, for example, a control circuit for controlling a display, a hologram device, or a projector and control circuitry to control a corresponding one of the display, the hologram device, and the projector. According to one embodiment, the display module 160 may include a touch sensor adapted to sense touch, or a pressure sensor adapted to measure an intensity of a force incurred by the touch.

The audio module 170 may convert a sound into an electric signal or vice versa. According to one embodiment, the audio module 170 may obtain the sound via the input module 150 or output the sound via the sound output module 155 or an external electronic device (e.g., an electronic device 102 such as a speaker or a headphone) directly or wirelessly connected to the electronic device 101.

The sensor module 176 may detect an operational state (e.g., power or temperature) of the electronic device 101 or an environmental state (e.g., a state of a user) external to the electronic device 101 and generate an electric signal or data value corresponding to the detected state. According to one embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or a fingerprint sensor.

The interface 177 may support one or more specified protocols to be used for the electronic device 101 to be coupled with the external electronic device (e.g., the electronic device 102) directly (e.g., wiredly) or wirelessly. According to one embodiment, the interface 177 may include, for example, a high-definition multimedia interface (HDMI), a universal serial bus (USB) interface, a secure digital (SD) card interface, or an audio interface.

The connecting terminal 178 may include a connector via which the electronic device 101 may be physically connected to an external electronic device (e.g., the electronic device 102). According to one embodiment, the connecting terminal 178 may include, for example, an HDMI connector, a USB connector, an SD card connector, or an audio connector (e.g., a headphone connector).

The haptic module 179 may convert an electric signal into a mechanical stimulus (e.g., a vibration or a movement) or an electrical stimulus which may be recognized by a user via one's tactile sensation or kinesthetic sensation. According to one embodiment, the haptic module 179 may include, for example, a motor, a piezoelectric element, or an electric stimulator.

The camera module 180 may capture still and moving images. According to one embodiment, the camera module 180 may include one or more lenses, image pixels, image signal processors, or flashes.

The power management module 188 may manage power supplied to the electronic device 101. According to one embodiment, the power management module 188 may be implemented as, for example, at least a part of a power management integrated circuit (PMIC).

The battery 189 may supply power to at least one component of the electronic device 101. According to one embodiment, the battery 189 may include, for example, a primary cell not rechargeable, a secondary cell rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently of the processor 120 (e.g., an AP) and that support a direct (e.g., wired) communication or wireless communication. According to one embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module, or a power line communication (PLC) module). A corresponding one of these communication modules may communicate with the external electronic device 104 via the first network 198 (e.g., a short-range communication network, such as Bluetooth™, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., a LAN or a wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the SIM 196.

The wireless communication module 192 may support a 5G network after a 4G network, and next-generation communication technology, for example, a new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., a mmWave band) to achieve, e.g., a high data transmission rate. The wireless communication module 192 may support various technologies for securing performance on a high-frequency band, such as, e.g., beamforming, massive multiple-input and multiple-output (MIMO), full dimensional MIMO (FD-MIMO), an array antenna, analog beam-forming, or a large scale antenna. The wireless communication module 192 may support various requirements specified in the electronic device 101, an external electronic device (e.g., the electronic device 104), or a network system (e.g., the second network 199). According to one embodiment, the wireless communication module 192 may support a peak data rate (e.g., 20 Gbps or more) for implementing eMBB, loss coverage (e.g., 164 dB or less) for implementing mMTC, or U-plane latency (e.g., 0.5 ms or less for each of downlink (DL) and uplink (UL), or a round trip of 1 ms or less) for implementing URLLC.

The antenna module 197 may transmit or receive a signal or power to or from the outside (e.g., the external electronic device) of the electronic device 101. According to one embodiment, the antenna module 197 may include a slit antenna, and/or an antenna including a radiating element including a conductive material or a conductive pattern formed in or on a substrate (e.g., a printed circuit board (PCB)). According to one embodiment, the antenna module 197 may include a plurality of antennas (e.g., array antennas). In such a case, at least one antenna appropriate for a communication scheme used in a communication network, such as the first network 198 or the second network 199, may be selected by, for example, the communication module 190 from the plurality of antennas. The signal or the power may be transmitted or received between the communication module 190 and the external electronic device via the at least one selected antenna. According to one embodiment, another component (e.g., a radio frequency integrated circuit (RFIC)) other than the radiating element may be additionally formed as a part of the antenna module 197.

According to one embodiment, the antenna module 197 may form a mmWave antenna module. According to one embodiment, the mmWave antenna module may include a PCB, an RFIC disposed on a first surface (e.g., a bottom surface) of the PCB or adjacent to the first surface and capable of supporting a designated a high-frequency band (e.g., the mmWave band), and a plurality of antennas (e.g., array antennas) disposed on a second surface (e.g., a top or a side surface) of the PCB, or adjacent to the second surface and capable of transmitting or receiving signals in the designated high-frequency band.

At least some of the above-described components may be coupled mutually and communicate signals (e.g.,

commands or data) therebetween via an inter-peripheral communication scheme (e.g., a bus, general purpose input and output (GPIO), serial peripheral interface (SPI), or mobile industry processor interface (MIPI)).

According to one embodiment, commands or data may be transmitted or received between the electronic device 101 and the external electronic device 104 via the server 108 coupled with the second network 199. Each of the external electronic devices 102 and 104 may be a device of the same type as or a different type from the electronic device 101.

According to one embodiment, all, or some of operations to be executed by the electronic device 101 may be executed at one or more of the external electronic devices 102, 104, and 108. For example, if the electronic device 101 needs to perform a function or a service automatically, or in response to a request from a user or another device, the electronic device 101, instead of, or in addition to, executing the function or the service, may request one or more external electronic devices to perform at least part of the function or the service. The one or more external electronic devices receiving the request may perform the at least part of the function or the service requested, or an additional function or an additional service related to the request and may transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In one embodiment, the external electronic device 104 may include an Internet-of things (IoT) device. The server 108 may be an intelligent server using machine learning and/or a neural network. According to one embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

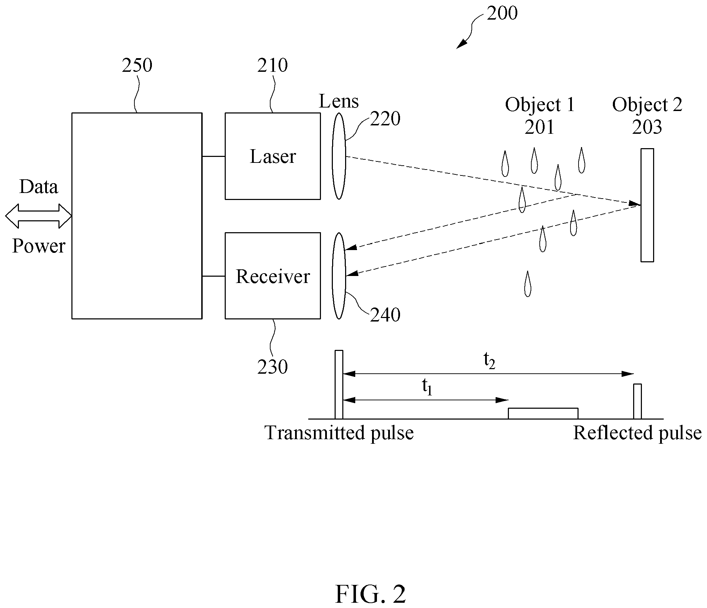

FIG. 2 is a block diagram illustrating a general operation of a light detection and ranging (LiDAR) system. Referring to FIG. 2, a LiDAR system 200 may include a laser transmitter 210, a first lens 220, a laser detector (receiver) 230, a second lens 240, and a controller 250.

A laser transmitter 210 may output a pulse signal, that is, a pulse laser, to subjects 201 and 203 (e.g., objects 1 and 2) via the first lens 220. Laser light sources may be used as light sources of the laser transmitter 210. The laser light sources may have a specific wavelength in a wavelength region from 250 nm to 11 $\mu$m, or variable wavelengths. Alternatively, a semiconductor laser diode with a small size, and/or a low power may be used.

The laser detector 230 may detect a laser signal reflected by the subjects 201 and 203 as a result of the pulse laser, which was output from the laser transmitter 210,. The laser detector 230 receives the reflected laser signal via the second lens 240.

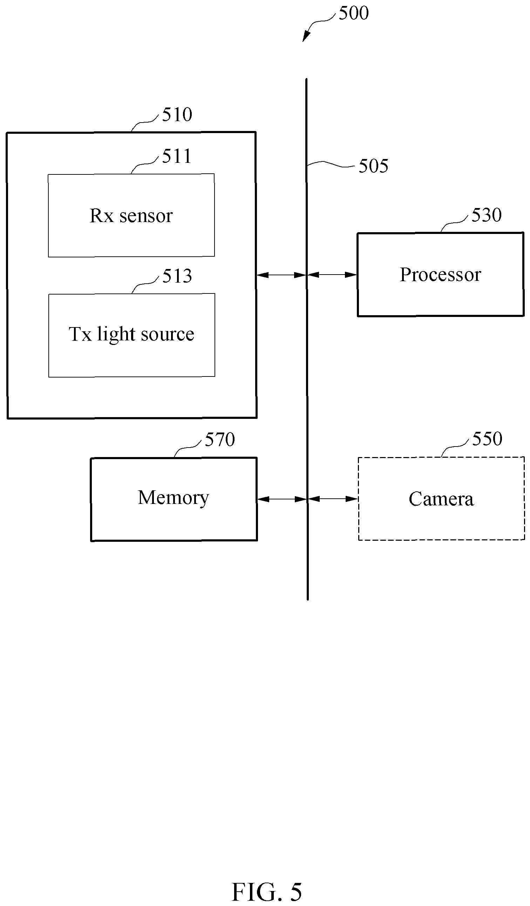

The controller 250 may transmit and receive data obtained by receiving/collecting and processing signals detected by the laser detector 230 to and from a processor (e.g., the processor 530 of FIG. 5).

The LiDAR system 200 may be categorized into, for example, a time-of-flight (TOF) scheme and a phase-shift method according to a modulation method of a laser signal. The TOF method may be a method of measuring a distance from subjects 201 and 203 by measuring times t1 and t2 during which the laser transmitter 210 emits a pulse signal and reflected pulse signals from the subjects 201 and 203 within a measurement range arrive at the laser detector 230. The phase-shift method may be a method in which the laser transmitter 210 emits a laser beam that is continuously modulated at a specific frequency, and in which the laser detector 230 measures a phase variation of a signal that is reflected from an object in a measurement range and that returns to calculate a time and a distance.

The LiDAR system 200 may map a distance via a sensing method of sensing the subjects 201 and 203 through the above-described process. For example, a pulse power of a light source, a reciprocating time of a pulse signal, a phase shift, and/or a pulse width may correspond to general parameters used to extract information from the LiDAR system 200.

The LiDAR system 200 may be used in a manner in which the laser transmitter 210 emits a pulse signal to acquire distance information from subjects 201 and 203 within a measurement range.

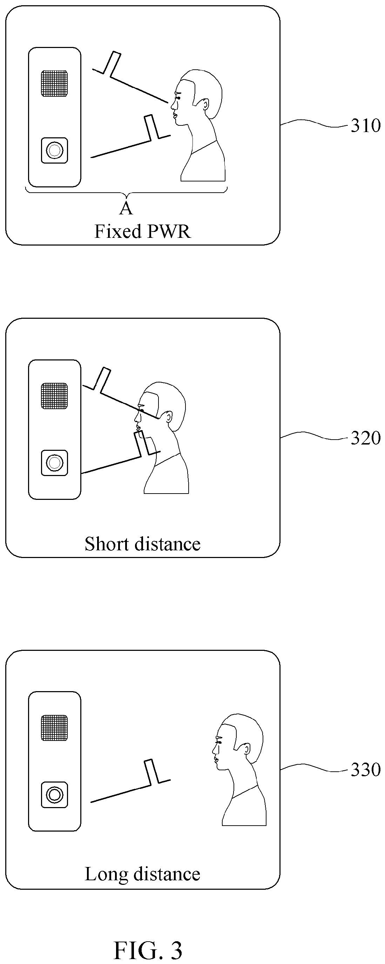

FIG. 3 is a diagram illustrating a LiDAR system with a fixed transmission power. FIG. 3 illustrates an example 310 in which a transmission power of a LiDAR system (e.g., the LiDAR system 200 of FIG. 2) is set to a fixed value corresponding to a predetermined distance A where a subject is located. In an example 320, a distance from the subject is less than the distance A, and in example 330, a distance from the subject is greater than the distance A.

For example, the transmission power of the LiDAR system 200 may be fixed to correspond to the distance A as illustrated in example 310. In this example, the LiDAR system 200 may efficiently recognize a subject (e.g., a person) by consuming a baseline amount of power. Here, "baseline power" represents the amount of power required to transmit the pulse to the distance A.

In an example scenario, when the LiDAR system 200 transmits a pulse laser at a fixed transmission power at the distance A regardless of a distance from the subject, performance, and efficiency of the LiDAR system 200 may decrease.

For example, consider the scenarios in which the distance from the subject is less than the distance A as illustrated in example 320, or greater than the distance A as illustrated in example 330. If the distance to the subject is less than the distance A as shown in example 320, a smaller amount of transmission power may be used in comparison to the baseline power required to detect the subject at distance A. If a pulse laser is transmitted with the fixed baseline power required for transmission power to the distance A, the power efficiency of the LiDAR system 200 is reduced by unnecessarily consuming higher than required power. If the distance to the subject is greater than the distance A as shown in FIG. 330, a larger amount of transmission power may be used in comparison to the baseline power required to detect the subject at a distance A because the distance to the subject is greater than distance A. In this example, when the pulse laser is transmitted with the fixed baseline power required for transmission power to the distance A, it may be difficult to recognize the subject due to a lack of the transmission power even when there is a margin in the transmission power of the LiDAR system 200.

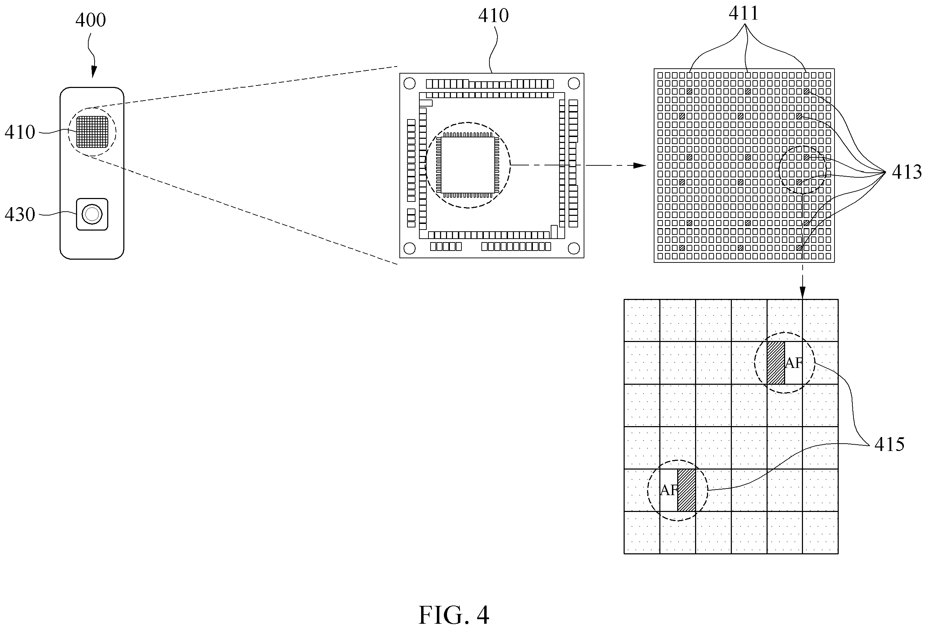

A LiDAR system (e.g., a LiDAR system 400 in FIG. 4 and a LiDAR system 510 of FIG. 5) according to one or more embodiments may recognize a distance to a subject during an initial operation and adaptively determine a transmission power of a light source based on the recognized distance, which improves the power efficiency and/or performance of the LiDAR system.

FIG. 4 is a diagram illustrating a structure of a LiDAR system according to one embodiment. Referring to FIG. 4, the LiDAR system 400 may include an Rx sensor 410 and a Tx light source 430.

The Rx sensor 410 may receive pulse signals reflected by the subject as a result of a pulse laser output from the Tx light source 430.

Unlike the LiDAR system 200 described above with the reference to FIG. 2, the Rx sensor 410 may include autofocus pixels 413 distributed in image pixels 411 for sensing image information. The autofocus pixels 413 may acquire autofocus images. The autofocus pixels 413 may be, for example, phase-based autofocus pixels. Hereinafter, for convenience of description, a phase-based autofocus pixel may be referred to as an "autofocus pixel". The autofocus pixels 413 facilitates to improve a focusing speed by providing a correct direction and amount of a change of a position of a lens based on a single frame of captured information. The image pixels 411 may also be referred to as "image pixel sensors." In addition, the autofocus pixels 413 may also be referred to as "autofocus pixel sensors."

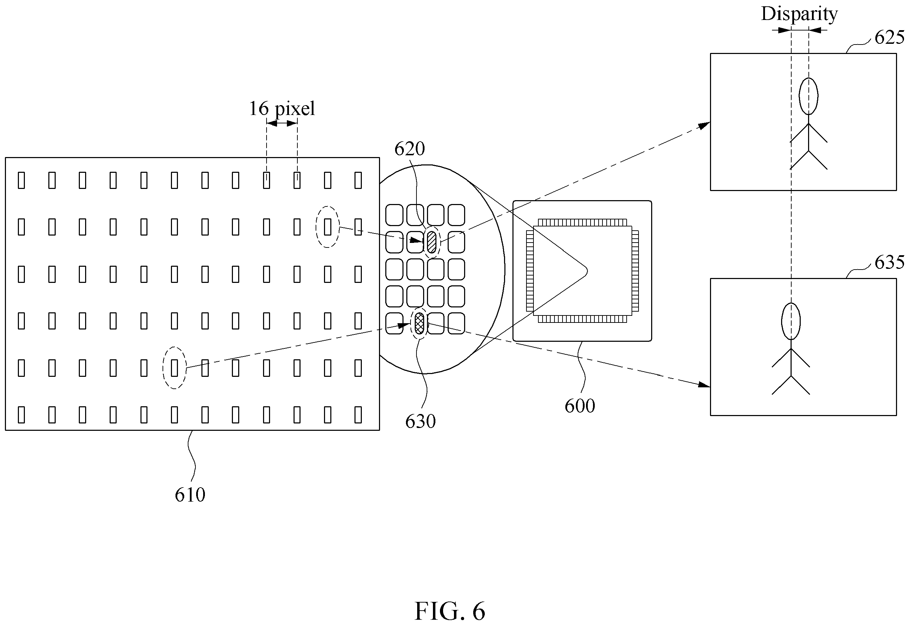

The LiDAR system 400 may calculate a distance to a subject based on a disparity between corresponding autofocus pixels 413 in autofocus images (AF images) (e.g., autofocus images 625 and 635 of FIG. 6). The autofocus images may be, for example, a left autofocus image and a right autofocus image received via a pair 415 of autofocus pixels. The autofocus images may include, for example, a grayscale image associated with an intensity measured or secured in the pair 415 of autofocus pixels. The pair 415 of autofocus pixels may be distributed in the image pixels 411 with a sufficient (i.e., predetermined) density to provide a resolution. For example, a pair 415 of autofocus pixels in each 16x16 (i.e., density) pixel array. In other embodiments, two pairs 415 of autofocus pixels may be placed in each 16x16 pixel array. It is understood that the predetermined density can be varied in other embodiments. The distribution can specify placing the pair 415 of autofocus pixels such that they are in different rows and different columns in the 16x16 pixel array. In other embodiments, the distribution may specify that the autofocus pixels have at least one row and one column between each other. In some embodiments, the distribution of the autofocus pixels 413 among the image pixels 411 of the Rx sensor 410 is stochastic. Alternatively, the distribution can be a predetermined pattern, for example, an autofocus pixel 413 in every ith position of particular rows r(f), where f is a function that results in an integer.

The image pixels 411 and autofocus pixels 413 may include, for example, a chargecoupled device, an active pixel sensor, a photodiode, or an arbitrary photo sensor, or any other device that converts light into an electrical signal but are not limited thereto.

Pairs of autofocus pixels 413 may be arranged in an arbitrary manner to acquire two autofocus images. Pairs of the autofocus pixels 413 may be arranged along a diagonal as illustrated in the pair 415 of the autofocus pixels of FIG. 4. Alternatively, pairs of autofocus pixels 413 may be arranged along a horizontal (same row), or along a vertical (same column). In some embodiments, the autofocus pixels 413 are adjacently arranged. The term "adjacently arranged" may be understood to mean that two autofocus pixels constituting a pair are adjacent to each other but are separated and arranged by a predetermined offset that causes a phase difference or a disparity between the two autofocus pixels in the pair. For example, the pairs of the auto-focus pixels 413 may be arranged in a similar pattern as shown in an Rx sensor 600 of FIG. 6 below, or may be arranged in a different pattern from that shown herein.

The phase difference between the autofocus images acquired by the autofocus pixels 413 may be used to calculate a distance to the subject.

The Tx light source 430 outputs a pulse laser in the same manner as in the laser transmitter 210 of the LiDAR system 200 described above with reference to FIG. 2, but a transmission power may be adaptively adjusted based on the distance to the subject calculated according to the phase difference between the autofocus images.

In contrast to the use of the laser transmitter 210 and the laser detector 230 in the general LiDAR system described above with reference to FIG. 2, the distance to the subject may be calculated based on the phase difference between the autofocus images (AF images) corresponding to the autofocus pixels 413 of the Rx sensor 410 rather than the Tx light source 430, and the transmission power of the Tx light source 430 may be adjusted based on the distance, and accordingly it is possible to reduce power consumption or improve the performance of the LiDAR system 400.

FIG. 5 is a block diagram illustrating an electronic device including a LiDAR system according to one embodiment. Referring to FIG. 5, an electronic device 500 (e.g., the electronic device 101 of FIG. 1) according to one embodiment may include a LiDAR system 510 (e.g., the LiDAR system 400 of FIG. 4) and a processor 530. Also, the electronic device 500 may further include a camera 550 (e.g., the camera module 180 of FIG. 1) and a memory 570 (e.g., the memory 130 of FIG. 1). The LiDAR system 510, the processor 530, the camera 550, and the memory 570 may be connected to each other via a communication bus 505.

The LiDAR system 510 may include an Rx sensor 511 and a Tx light source 513. The Rx sensor 511 may include autofocus pixels (e.g., the autofocus pixels 413 of FIG. 4 and the autofocus pixels 620 and 630 of FIG. 6) distributed in the image pixels (e.g., the image pixels 411 of FIG. 4 and the image pixels 610 of FIG.6) that sense image information. The Tx light source 513 may output a pulse laser. The LiDAR system 510 may correspond to, for example, the LiDAR system 400 described above with reference to FIG. 4.

The processor 530 may calculate a distance to a subject using the autofocus pixels 620 and 630 included in the Rx sensor 511 before the Tx light source 513 is driven by the LiDAR system 510. For example, after rendering of surroundings is completed, the processor 530 may sense a movement of the subject using the autofocus pixels 620 and 630 in a state in which there is no change in the surroundings. The processor 530 may detect a change in the surroundings from a frame rate of image frames captured by the camera 550.

The processor 530 may drive the Tx light source 513 in the LiDAR system 510 when the movement of the subject is detected.

The processor 530 may determine whether the subject is in focus using the autofocus pixels 620 and 630. When the subject is in focus, the processor 530 may calculate a distance to the subject in focus.

For example, when the subject is not in focus, the processor 530 may drive the autofocus pixels 620 and 630 of the Rx sensor 511 to scan the surroundings, instead of driving the Tx light source 513. Thus, power efficiency may be enhanced by preventing transmission of the Tx light source 513, thus, saving power.

The electronic device 500 may be, for example, a wearable electronic device such as a head-mounted display (HMD) device. The HMD device may continue to perform modeling of a space when the HMD device is mounted for peripheral recognition. If there is no object which requires an accurate gesture or a specific recognition, that is, if there is no change in a surrounding environment, the electronic device 500 may reduce a power consumption caused by the Tx light source by scanning surroundings only with the Rx sensor 511 instead of continuing to recognize a surrounding environment using the Rx sensor 511 and the Tx light source 513 of the LiDAR system 510. The electronic device 500 may use the Tx light source 513 when it is necessary to acquire accurate depth information due to a change in the surroundings, e.g., an emergence of a subject that needs to be recognized, a gesture.

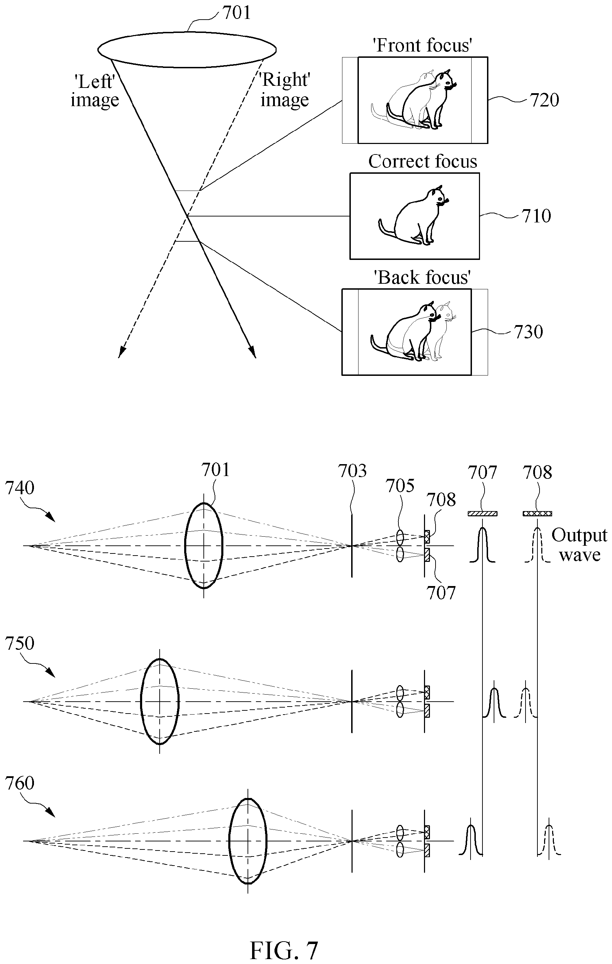

The processor 530 may calculate a distance to a subject based on a phase difference (or a disparity) between autofocus images (e.g., the autofocus images 625 and 635 of FIG. 6) corresponding to the autofocus pixels 620 and 630 photographing the subject. The processor 530 may calculate a phase difference between phases corresponding to the autofocus images 625 and 635 using a correlation operation between phases corresponding to the autofocus images 625, 635, and calculate the distance to the subject based on the phase difference. A method in which the processor 530 calculates the distance to the subject will be described in more detail with reference to FIGS. 6 and 7 below.

The processor 530 may adaptively determine Tx light source 513 based on the distance to the subject. For example, when the distance to the subject is equal to or less than a first distance, the processor 530 may adjust the transmission power of the Tx light source 513 to a first power. Alternatively, when the distance to the subject is greater than the first distance and equal to or less than a second distance greater than the first distance, the processor 530 may adjust the transmission power of the Tx light source 513 to a second power greater than the first power. Alternatively, when the distance to the subject is greater than the second distance and equal to or less to a third distance greater than the second distance, the processor 530 may adjust the transmission power of the Tx light source 513 to a third power greater than the second power. In this case, an amount of transmission power to be consumed according to the distance to the subject may be stored in advance in the form of, for example, a look-up table.

The processor 530 may control the Tx light source 513 to output a pulse laser according to the adaptively determined transmission power.

According to one embodiment, the electronic device 500 may further include the camera 550 having an auto-focusing function. In this example, the processor 530 may adaptively determine the transmission power of the Tx light source 513 based on distance information of a distance to the subject in focus acquired using the auto-focusing function of the camera 550 and control the Tx light source 513 to output the pulse laser according to the transmission power.

However, the operation of the processor 530 is not limited to those described above, and the processor 530 may also perform the above-described operation together with at least one of the operations that will be described below with reference to FIGS. 6 to 11.

The memory 570 may store the distance to the subject calculated by the processor 530 and/or the transmission power of the Tx light source 513 adaptively determined by the processor 530. Also, the memory 570 may store virtual content generated by the processor 530.

Also, the memory 570 may store a variety of information generated by the processor 530. In addition, the memory 570 may store a variety of data and programs. The memory 570 may include, a volatile memory or a non-volatile memory. The memory 570 may include a high-capacity storage medium such as a hard disk to store a variety of data.

FIG. 6 is a diagram illustrating a method of calculating a distance from a subject in an electronic device including a LiDAR system according to one embodiment. FIG. 6 illustrates an example of a disparity between two autofocus images 625, 635 corresponding to two autofocus pixels 620, 630 (e.g., the autofocus pixels 413 of FIG. 4) included in the image sensors 610 of the Rx sensor 600 (e.g., the Rx sensor 410 of FIG. 4 and the Rx sensor 511 of FIG. 5) according to an embodiment. The autofocus images 625, 635 may correspond to, for example, a right-eye image and a left-eye image.

For example, in the Rx sensor 600, a pair of autofocus pixels 620, 630 may be disposed in an area of $16 \times 16$ image sensors 610. In this example, the autofocus image 625 may be acquired by the autofocus pixel 620. The autofocus image 635 may be acquired by the autofocus pixel 630.

An electronic device may calculate a disparity based on a defocus amount or a phase difference between the autofocus images 625, 635. The phase difference between autofocus images will be described in more detail with reference to FIG. 7 below.

FIG. 7 is a diagram illustrating a phase difference of autofocus images in an in-focus state, a front-focus state, and a back-focus state according to one embodiment.

FIG. 7 illustrates autofocus images 710 in the in-focus state based on a photographic lens 701, autofocus images 720 in the front-focus state, and autofocus images 730 in a back-focus state.

For example, a ray passing through an image plane 703 after passing through the photographing lens 701 may be split into two rays through separation lenses 705, and an image of a subject may be formed on different autofocus pixels 707, 708 (e.g., the autofocus pixels 413 of FIG. 4 and the autofocus pixels 620, 630 of FIG. 6). The separation lenses 705 may correspond to, for example, autofocus secondary micro-lens arrays, but are not limited thereto. The autofocus pixels 707, 708 may correspond to, for example, matching line sensors.

An electronic device (e.g., the electronic device 101 of FIG. 1 and the electronic device 500 of FIG. 5) may determine a position of a focus by comparing a position relationship between the autofocus images 710, 720, 730 acquired from the autofocus pixels 707, 708.

In an example 740, the autofocus images 710 may be in focus. In this example, because light is focused on the center of the autofocus pixels 707 and 708, phases corresponding to the autofocus images 710 may completely overlap.

In an example 750, the autofocus image 720 may be in the front-focus state. In this example, because light is collected to a more inward side than the center of each of the autofocus pixels 707, 708, peaks of phases corresponding to the autofocus images 720 may be obtained on the more inward side than the center, and the subject may appear split into two parts.

In an example 760, a position of a focus corresponding to the autofocus image 730 may be in the back-focus state. In this example, because light is collected to a more outward side than the center of each of the autofocus pixels 707, 708, peaks of phases corresponding to the autofocus images 730 may be obtained on the more outward side of the center, and the subject may appear split into two parts.

A difference in an output level or output wave of the autofocus pixels 707, 708 in the examples 740 to 760 may be referred to as a "phase difference" or a "defocus amount", and the "phase difference" or "defocus amount" may correspond to a difference in a state information in each of the autofocus images 710, 720, 730. Hereinafter, the "phase difference" and "defocus amount" may be understood to have the same meaning.

For example, in the in-focus state such as the autofocus images 710 in the example 740, consider that the phase difference (or a defocus amount) is X. In this example scenario, the front-focus state, such as the autofocus images 720 in the example 750, the phase difference will be less than X, and in the back-focus state, such as the autofocus image 730 in the example 760, the phase difference will be greater than X.

As described above, the electronic device 500 may estimate the distance to the subject through the phase differences between the autofocus images 710, 720, 730 acquired from the autofocus pixels 707, 708. The estimate here can indicate a state of the subject - if the subject is in-focus, front-focused, or back-focused. Based on the state, the electronic device 500 can take further actions, which require power consumption. By determining whether to take one or more actions, or skipping to take the one or more actions, the electronic device 500 can conserve power (i.e., reduce power consumption/be more power efficient).

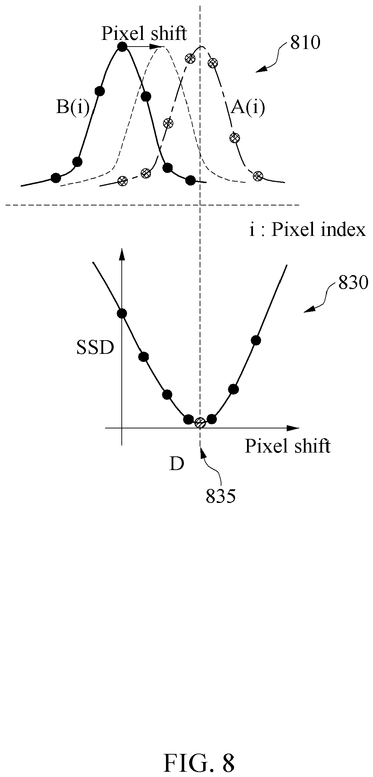

FIG. 8 is a diagram illustrating a method of calculating a distance to a subject based on a phase difference according to one embodiment. FIG. 8 illustrates graphs 810, 830 showing phase differences corresponding to autofocus images (e.g., the autofocus images 625, 635 of FIG. 6) acquired from a pair of autofocus pixels (e.g., the autofocus pixels 413 of FIG. 4, the autofocus pixels 620, 630 of FIG. 6 and the autofocus pixels 707, 708 of FIG. 7) of an electronic device (e.g., the electronic device 101 of FIG. 1, and the electronic device 500 of FIG. 5) according to one embodiment.

The electronic device 500 may calculate a phase difference between phases corresponding to the autofocus images 625 and 635 by a correlation operation between the phases corresponding to the two autofocus images 625 and 635. For example, the electronic device 500 may shift the phases corresponding to the autofocus images 625, 635 in units of pixels by the correlation operation and may calculate the phase difference between the phases corresponding to the autofocus images 625 and 635. The electronic device 500 may calculate the distance to the subject based on the phase difference.

The electronic device 500 may, for example, calculate a distance at which a difference between phases A and B corresponding to the two autofocus images 625 and 635 is zero, as shown in the graph 810 or 830, to calculate a distance to a subject.

For example, the electronic device 500 may calculate a distance at which a phase difference $\gamma(n)$ between the phases A and B corresponding to the two autofocus images 625 and 635 is zero, using a sum of absolute differences (SAD) technique expressed in Equation 1 below or a sum of squared differences (SSD) technique expressed in Equation 2 below.

For example, when the SAD technique is used, the phase difference $\gamma(n)$ may be acquired through Equation 1 below.

[Equation 1]

$$\gamma(n) = \sum_i \left| A(i) - B(i + n) \right|$$

In Equation 1, i corresponds to a pixel index, and n corresponds to a movement distance that shifts phase B(i) in the graph 810 in units of pixels to match with phase A(i). In this case, the movement distance n may correspond to the distance to the subject.

Alternatively, when the SSD technique is used, the phase difference $\gamma(n)$ may be calculated through Equation 2 below.

[Equation 2]

$$\gamma(n) = \sum_i \left( A(i) - B(i + n) \right)^2$$

In the graph 830, an x-coordinate of a minimum point 835 may correspond to a phase difference value. Here, a value of the x-coordinate may correspond to a distance D from a subj ect.

Alternatively, the electronic device 500 may calculate a distance corresponding to a maximum product between phases corresponding to the two autofocus images 625 and 635. The electronic device 500, for example, may calculate a distance n corresponding to a phase difference $\gamma(n)$ between phases, using a normalize cross-correlation (NNC) techniqque or a cross-correlation (CC) technique as shown in Equation 3 below.

[Equation 3]

$$\gamma(n) = \sum_i \left( A(i) \times B(i + n) \right)$$

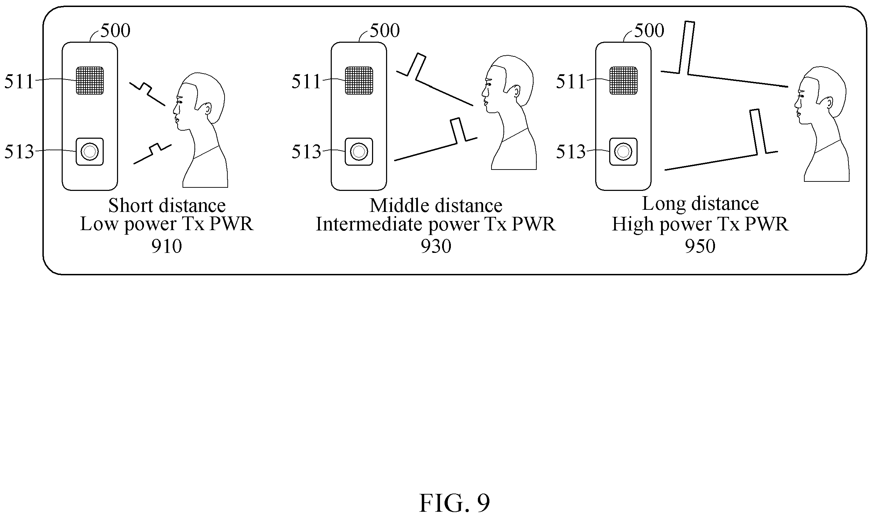

FIG. 9 is a diagram illustrating an example of transmission power of a Tx light source adaptively determined in an electronic device according to one embodiment. FIG. 9 illustrates example scenarios 910, 920, 930, in which the transmission power of pulse lasers output by a Tx light source 513 of the electronic device 500 is varied according to an estimated distance from a subject, the distance estimated based on the Rx sensor 511. The example scenarios are applicable for all other electronic devices described herein (e.g., Figs. 1, 4, 10, etc.).

In the example scenario 910, when the distance to the subject is determined to be shorter than a first predetermined (first threshold) distance (e.g., 1 meter, 3 meters, etc.), the electronic device 500 may determine and use a low transmission power value (low value). The electronic device 500 may control the Tx light source 513 to output a pulse laser at the low transmission power.

Alternatively, in the example scenario 930, when the distance to the subject is determined to be greater than the first predetermined distance, but shorter than a second predetermined distance (i.e., within a predetermined range; e.g., 3-5 meters, 3-7 meters, etc.), the electronic device 500 may determine and use an intermediate transmission power value. The electronic device 500 may control the Tx light source 513 to output a pulse laser at the intermediate transmission power. The intermediate transmission power is greater than the lower transmission power.

In the example scenario 950, when the distance to the subject is determined to be greater than the second predetermined distance, the electronic device 500 may determine and use a high power as transmission power. The electronic device 500 may control the Tx light source 513 to output a pulse laser at the high transmission power. The high transmission power is greater than the intermediate transmission power. Accordingly, the transmission power at which the laser pulses are output by the Tx light source 513 is controlled based on the estimated distance of the subject. The estimated distance of the subject is determined by the Rx sensor 511 using the autofocus pixels as described herein.

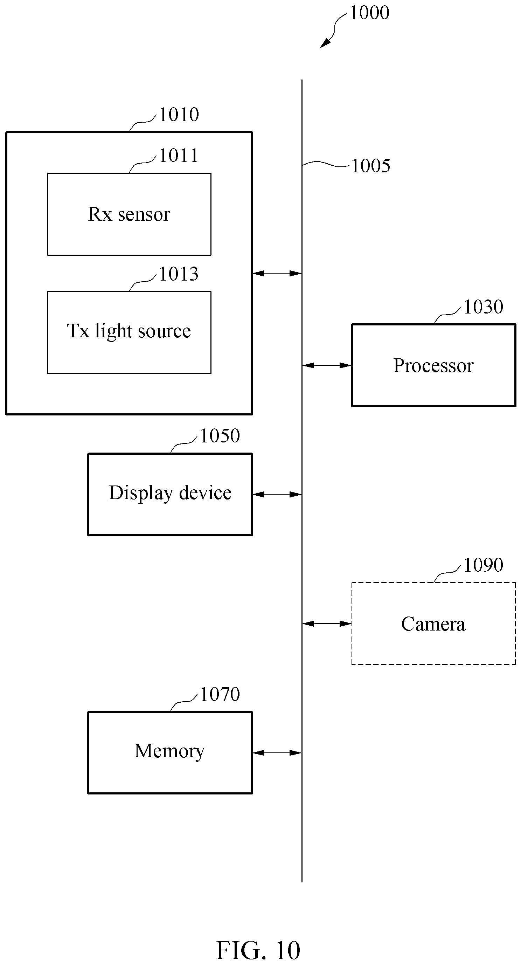

FIG. 10 is a block diagram illustrating a wearable electronic device according to one embodiment. Referring to FIG. 10, a wearable electronic device 1000 (e.g., the electronic device 101 of FIG. 1, and the electronic device 500 of FIG. 5) according to one embodiment may include a LiDAR system 1010 (e.g., the LiDAR system 400 of FIG. 4, and the LiDAR system 510 of FIG. 5). The LiDAR system 1010 can include an Rx sensor 1011 (e.g., the Rx sensor 410 of FIG. 4, the Rx sensor 511 of FIG. 5, and the Rx sensor 600 of FIG. 6) and a Tx light source 1013 (e.g., the Tx light source 513 of FIG. 5). The electronic device 1000 further includes a processor 1030 (e.g., the processor 120 of FIG. 1, and the processor 530 of FIG. 5), a display device 1050 (e.g., the display module 160 of FIG. 1), and a memory 1070 (e.g., the memory 570 of FIG. 5). In some embodiments, the wearable electronic device 1000 includes a camera 1090 (e.g., the camera module 180 of FIG. 1 and the camera 550 of FIG. 5). The LiDAR system 1010, the processor 1030, the display device 1050, and the memory 1070 may be connected to each other through a communication bus 1005.

The Rx sensor 1011 may include autofocus pixels (e.g., the autofocus pixels 413 of FIG. 4, the autofocus pixels 620, 630 of FIG. 6, and the autofocus pixels 707, 708 of FIG. 7). The autofocus pixels are distributed among the image pixels (e.g., the image pixels 411 of FIG. 4, and the image pixels 610 of FIG. 6) for sensing image information including a plurality of image frames.

The Tx light source 1013 may output a pulse laser.

The processor 1030 may calculate the distance to the subject using the autofocus pixels 620, 630 included in the Rx sensor 1011 before the Tx light source 1030 is driven. The processor 1030 may adaptively determine the transmission power of the Tx light source 1013 based on the distance to the subject. The processor 1030 may control the Tx light source 1013 to output a pulse laser according to the transmission power. The processor 1030 may generate augmented reality content, which includes virtual content based on the image information and the distance to the subject.

The processor 1030 generates the augmented reality content based on the distance to the subject. For example, the size, shape, color, or any other attribute of the virtual content may be adjusted based on the distance to the subject. For example, if the subject is closer (first distance), the size of the virtual content may be larger compared to when the subject is farther (third distance). In some embodiments, auditory attributes (e.g., volume, frequencies, playback speed, etc.) may be adjusted based on the distance to the subject.

The display device 1050 may display the virtual content generated by the processor 1030.

The memory 1070 may store the distance to the subject calculated by the processor 1030 and/or the transmission power of the Tx light source 1013 adaptively determined by the processor 1030. Also, the memory 1070 may store the virtual content generated by the processor 1030.

The camera 1090 may be, for example, a camera having an auto-focusing function. When the electronic device 1000 includes the camera 1090, the processor 1030 may adaptively determine the transmission power of the Tx light source 1013 based on a distance to the subject in focus. The distance is acquired using the auto-focusing function of the camera 1090. The processor 1030 may control the Tx light source 1013 to output a pulse laser according to the adaptively determined transmission power.

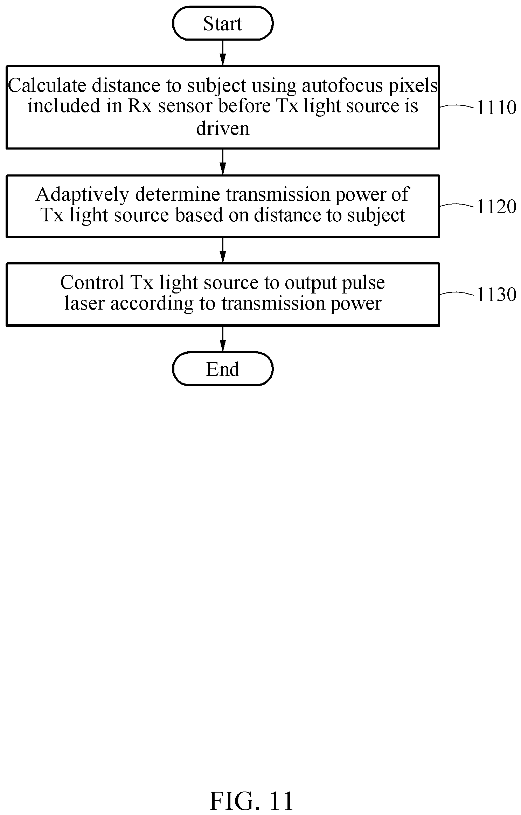

FIG. 11 is a flowchart illustrating a method of controlling an electronic device according to one embodiment. In the following embodiment, operations may be performed sequentially, but may not be necessarily performed sequentially in other embodiments. For example, the order of each operation may be changed, or at least two operations may be performed simultaneously.

Referring to FIG. 11, an operation of controlling an electronic device (e.g., the electronic device 101 of FIG. 1, the electronic device 500 of FIG. 5, and the wearable electronic device 1000 of FIG. 10) including an Rx sensor and a Tx light source according to one embodiment is shown.

In operation 1110, the electronic device 500 calculates/estimates a distance to a subject using autofocus pixels (e.g., the autofocus pixels 413 of FIG. 4, the autofocus pixels 620, 630 of FIG. 6, and the autofocus pixels 707, 708 of FIG. 7). The autofocus pixels are included in the Rx sensor (e.g., the Rx sensor 511 of FIG. 5, the Rx sensor 600 of FIG. 6 and the Rx sensor 1011 of FIG. 10). The distance is computed before driving the Tx light source (e.g., the Tx light source 513 of FIG. 5 and the Tx light source 1013 of FIG.10). The electronic device 500 may calculate the distance to the subject based on a disparity between autofocus images corresponding to the autofocus pixels 620, 630. The electronic device 500 may determine whether the subject is in focus by using the autofocus pixels 620, 630. When the subject is in focus, a distance to the subject may be calculated. For example, when the subject is not in focus, the electronic device 500 may scan the surroundings by driving the autofocus pixels 620, 630 instead of driving the Tx light source 513. The electronic device 500 may drive the autofocus pixels 620, 630 of the Rx sensor 511 and may not drive the Tx light source 513, thereby enhancing power efficiency.

For example, the electronic device 500 may detect a defocus amount (phase difference) and a direction from a single image, so that a distance between the subject and the electronic device 500 may be calculated from autofocus images (e.g., the autofocus images 625, 635 of FIG. 6) with different disparities. For example, the electronic device 500 may calculate a phase difference between phases corresponding to the autofocus images 625, 635 by a correlation operation between the phases corresponding to the autofocus images 625, 635. The electronic device 500 may calculate the distance to the subject based on the phase difference.

According to one embodiment, the electronic device 500 may further include a camera (e.g., the camera module 180 of FIG. 1, the camera 550 of FIG. 5, and the camera 1090 of FIG. 10) with an auto-focusing function. In this case, the electronic device 500 may acquire a distance to the subject in focus using the auto-focusing function of the camera 550.

In operation 1120, the electronic device 500 adaptively determines the transmission power of the Tx light source 513 based on the distance to the subject calculated in operation 1110. For example, when the distance to the subject is equal to or less than a first distance, the electronic device 500 may determine the transmission power of the Tx light source 513 as a first power. When the distance to the subject is greater than the first distance and equal to or less than a second distance greater than the first distance, the electronic device 500 configures/sets/adjusts the transmission power of the Tx light source 513 to a second power greater than the first power. Alternatively, when the distance to the subject is a third distance, which exceeds the second distance, the electronic device 500 may determine the transmission power of the Tx light source 513 as a third power greater than the second power. In the above description, a method of adaptively determining the transmission power of the Tx light source 513 based on the distance to the subject has been described in three steps, but the embodiments are not limited thereto, and may be determined in various steps such as two steps or five steps.

As described above, when the subject is at a relatively short distance (e.g., first distance), the electronic device 500 may increase a power efficiency by lowering the transmission power of the Tx light source 513. Also, when the subject is relatively far away (third distance), the electronic device 500 may increase the transmission power of the Tx light source 513, thereby increasing coverage of the electronic device 500 or a LiDAR system (e.g., the LiDAR system 400 of FIG. 4, and the LiDAR system 510 of FIG. 5).

In operation 1130, the electronic device 500 controls the Tx light source 513 to output a pulse laser according to the transmission power determined in operation 1120.

The electronic device 500 according to one embodiment may be, for example, a wearable device such as smart glasses an HMD such as an augmented reality (AR) device, a virtual reality (VR) device, or a mixed reality (MR) device, but is not limited thereto.

The embodiments described above may be implemented by a hardware component, a software component, and/or a combination of a hardware component and a software component. For example, the apparatus, methods and components described in the embodiments may include, a processor, a controller, an arithmetic logic unit (ALU), a digital signal processor, a microcomputer, a field programmable gate array (FPGA), a programmable logic unit (PLU), a microprocessor, or any other device capable of executing and responding to instructions, may be implemented using a general-purpose computer or special purpose computer. The processing device may execute an operating system (OS) and a software application running on the operating system. A processing device may also access, store, manipulate, process, and generate data in response to the execution of the software. Although one processing device is sometimes described as being used, however, a person skilled in the relevant field may recognize that the processing device includes a plurality of processing elements and/or a plurality of types of processing elements. For example, the processing device may include a plurality of processors or a processor and a controller. Another processing configuration may also be included, such as a parallel processor.

Software may include a computer program, a code, an instruction, or a combination of one or more thereof, which configures a processing device to operate as desired or is independently or collectively processed. The software and/or data may be embodied in any kind of machine, component, physical device, virtual equipment, computer storage medium or apparatus or signal wave, to be interpreted by or to provide instructions or data to the processing device. The software may be distributed over networked computer systems and stored or executed in a distributed manner. Software and data may be stored in a computer-readable recording medium.

The method according to the embodiment may be implemented in the form of program instructions that can be executed through various computers and recorded in a computer-readable medium. The computer-readable medium may include program instructions, data files, and data structures, respectively or in combination, and the program instructions recorded on the medium are specially designed and configured for the embodiment or may be known and available to those skilled in the field of computer software. Examples of a computer-readable recording medium include magnetic media such as hard disks, floppy disks and magnetic tapes, optical media such as CD-ROMs and DVDs, and magneto-optical media such as a floptical disk and a magnetic tape, and hardware devices ROM, RAM and flash memory specially configured to store and execute program instructions. Examples of program instructions include machine language codes such as those generated by a compiler as well as a high-level language code that can be executed by a computer using an interpreter, etc.

The hardware devices described above may be configured to operate as one or a plurality of software modules to perform the operations of the embodiments, and vice versa.

As described above, although the embodiments have been described with reference to the limited diagrams, those skilled in the relevant field of technology may apply various technical modifications and variations based thereon. For example, the described techniques are performed in an order different from the described method, and/or the described components of the system, structure, apparatus, circuit, etc. are combined or combined in a different form than the described method, or other components substituted or substituted by equivalents may lead to an appropriate result.

Therefore, other implementations, other embodiments, and equivalents to the claims are also within the scope of the following claims.

According to one embodiment, the electronic device 101, 500, 1000 may include a LiDAR system 400, 510 including an Rx sensor 410, 511, 600, 1011 including auto-focus pixels 413, 620, 630, 707, 708 distributed in the image pixels 411, 610 for sensing image information and a Tx light source 430, 513, 1013 for outputting a pulse laser, and a processor 120, 530, 1030 configured to calculate a distance to a subject using the autofocus pixels 413, 620, 630, 707, 708 included in the Rx sensor 410, 511, 600, 1011 before the Tx light source 430, 513, 1013 is driven, to adaptively determine the transmission power of the Tx light source 430, 513, 1013 based on the distance to the subject, and to control the Tx light source 430, 513, 1013 to output a pulse laser according to the transmission power

According to one embodiment, the electronic device 101, 500, 1000 may further include camera 180, 550, 1090 with an auto-focusing function, and the processor 120, 530, 1030 may adaptively determine the transmission power of the Tx light source 430, 513, 1013 based on distance information on a distance to the subject in focus, acquired using the auto-focusing function of the camera 180, 550, 1090, and may control the Tx light source 430, 513, 1013 to output the pulse laser according to the transmission power.

According to one embodiment, the processor 120, 530, 1030 may determine whether the subject is focused using the autofocus pixels 413, 620, 630, 707, 708, and calculate the distance to the subject in focus when the subject is focused.

According to one embodiment, when the subject is not focused, the processor 120, 530, 1030 may scan surroundings by driving the autofocus pixels 413, 620, 630, 707, 708 instead of driving the autofocus pixels 430, 513, 1013.

According to one embodiment, when the distance to the subject is equal to or less than a first distance, the processor 120, 530, 1030 may adjust the transmission power of the Tx light source 430, 513, 1013 to the first power. When the distance to the subject is greater than the first distance and equal to or less than a second distance greater than the first distance, the processor 120, 530, 1030 may adjust the transmission power of the Tx light sources 430, 513, 1013 to a second power greater than the first power. When the distance to the subject exceeds the second distance, the processor 120, 530, 1030 may adjust the transmission power of the Tx light sources 430, 513, 1013 to a third power greater than the second power.

According to one embodiment, the electronic device 101, 500, 1000 may include at least one of a wearable device including smart glasses and an HMD including an AR device, a VR device, and an MR device.

According to one embodiment, the wearable electronic device 101, 500, 1000 may include an Rx sensor 410, 511, 600, 1011 including autofocus pixels 413, 620, 630, 707, 708 distributed in image pixels 411, 610 for sensing image information including a plurality of image frames, the Tx light source 430, 513, 1013 configured to output a pulse laser, a processor 120, 530, 1030 configured to calculate a distance to a subject using the autofocus pixels 413, 620, 630, 707, 708 included in the Rx sensor 410, 511, 600, 1011 before the Tx light source 430, 513, 1013 is driven, to adaptively determine the transmission power of the Tx light source 430, 513, 1013 based on the distance to the subject, to control the Tx light source 430, 513, 1013 to output a pulse laser according to the transmission power, and to generate virtual content based on the image information and the distance to the subject, and a display 160, 1050 configured to display the virtual content.

The wearable electronic device 101, 500, 1000 may further include a camera 180, 550, 1090 with an auto-focusing function. The processor 120, 530, 1030 may adaptively determine the transmission power of the Tx light source 430, 513, 1013 based on distance information on a distance to the subject in focus, acquired using the auto-focusing function of the camera 180, 550, 1090, and may control the Tx light source 430, 513, 1013 to output the pulse laser according to the transmission power.

The processor 120, 530, 1030 may determine whether the subject is focused using the autofocus pixels 413, 620, 630, 707, 708, and calculate a distance to the focused subject when the subject is focused.

When the subject is not focused, the processor 120, 530, 1030 may scan the surroundings by driving the autofocus pixels 413, 620, 630, 707, 708 instead of driving the Tx light source 430, 513, 1013.

When the distance to the subject is equal to or less than the first distance, the processor 120, 530, 1030 may adjust the transmission power of the Tx light source 430, 513, 1013 to a first power. When the distance to the subject is greater than the first distance and is equal to or less than the second distance greater than the first distance, the processor 120, 530, 1030 may adjust the transmission power of the Tx light source 430, 513, 1013 to a second power greater than the first power. When the distance to the subject is greater than the second distance, the processor 120, 530, 1030 may adjust the transmission power of the Tx light source 430, 513, 1013 to a third power greater than the second power.

The wearable electronic device may include at least one of smart glasses, and an HMD including an AR device, a VR device, and an MR device.

According to one embodiment, the LiDAR system 400, 510 may include a Tx light source 430, 513, 1013 configured to output a pulse laser, and Rx sensor 410, 511, 600, 1011 configured to receive the pulse signals reflected by the pulse laser on the subject. The Rx sensor 410, 511, 600, 1011 may include autofocus pixels 413, 620, 630, 707, 708 for acquiring autofocus images 625, 635 distributed in image pixels 411, 610 for sensing image information, and a phase difference between the image 625, 635 may be used to calculate the distance to the subj ect.

According to one embodiment, a method of controlling an electronic device 101, 500, 1000 may include operation 1110 of calculating a distance to the subject using autofocus pixels 413, 620, 630, 707, 708 included in the Rx sensor 410, 511, 600, 1011 before driving a Tx light source 430, 513, 1013, operation 1120 of adaptively determining a transmission power of the Tx light source 430, 513, 1013 based on the distance to the subject, and operation 1130 of controlling the Tx light source 430, 513, 1013 to output a pulse laser according to the transmission power.

According to one embodiment, the calculating of the distance to the subject may include at least one of calculating a distance at which a phase difference between the autofocus image 625, 635 is 0, and calculating a distance corresponding to a maximum product between phases corresponding to the two autofocus image 625, 635.

According to one embodiment, the electronic device 101, 500, 1000 may further include camera 180, 550, 1090 with an auto-focusing function, and the calculating of the distance to the subject may include acquiring distance information on a distance to the subject in focus using the auto-focusing function of the camera 180, 550, 1090.

According to one embodiment, the calculating of the distance to the subject may include determining whether the subject is focused using the autofocus pixels 413, 620, 630, 707, 708, and calculating the distance to the subject in focus when the subject is focused.

According to one embodiment, the method of controlling the electronic device 101, 500, 1000 may further include scanning the surroundings by driving the autofocus pixels 413, 620, 630, 707, 708 instead of driving the Tx light source 430, 513, 1013 when the subject is not focused.

According to one embodiment, the adaptively determining of the transmission power of the Tx light source 430, 513, 1013 may include at least one of determining the transmission power of the Tx light source 430, 513, 1013 as a first power when the distance to the subject is equal to or less than the first distance, determining the transmission power of the Tx light source 430, 513, 1013 as the second power when the distance to the subject is greater than the first distance and equal to or less than the second distance greater than the first distance, and determining the transmission power of the Tx light source 430, 513, 1013 as a third power greater than the second power when the distance to the subject exceeds the second distance.

## Claims

1. An electronic device comprising:

   a light detection and ranging (LiDAR) system comprising:

   an Rx sensor comprising autofocus pixels, and image pixels configured to sense image information, and a Tx light source configured to output a pulse laser; and

   a processor configured to:

   calculate a distance to a subject using the autofocus pixels included in the Rx sensor, adaptively determine a transmission power of the Tx light source based on the distance to the subject, and control the Tx light source to output the pulse laser according to the transmission power.

2. The electronic device of claim 1, further comprising:

a camera with an auto-focusing function,
wherein the processor is configured to calculate the distance to the subject using the auto-focusing function of the camera.

3. The electronic device of claim 1, wherein the processor is configured to determine whether the subject is in focus using the autofocus pixels, and to calculate the distance to the subject only in response to the subject being in focus.

4. The electronic device of claim 3, wherein, in response to the subject not being in focus, the processor scans surroundings by driving the autofocus pixels instead of driving the Tx light source.

5. The electronic device of claim 1, wherein the processor is further configured to:

adjust the transmission power of the Tx light source to a first power in response to the distance to the subject being equal to or less than a first distance;
adjust the transmission power of the Tx light source to a second power greater than the first power in response to the distance to the subject being greater than the first distance and equal to or less than a second distance, which is greater than the first distance; and
adjust the transmission power of the Tx light source to a third power greater than the second power in response to the distance to the subject exceeding the second distance.

6. The electronic device of claim 1, comprising at least one of:

a wearable device comprising smart glasses; and
a head-mounted device (HMD) comprising an augmented reality (AR) device, a virtual reality (VR) device, and a mixed reality (MR) device.

7. A wearable electronic device comprising:

an Rx sensor comprising a pair of autofocus pixels, each autofocus pixel configured to sense image information comprising a plurality of image frames;
a processor configured to:

calculate a distance to a subject using the pair of autofocus pixels included in the Rx sensor; and
generate virtual content based on the image information and the distance to the subject; and
a display configured to display the virtual content.

8. The wearable electronic device of claim 7, further comprising:

a Tx light source configured to output a pulse laser;
wherein, the processor is further configured to control the Tx light source to output the pulse laser according to a transmission power, wherein the transmission power is based on the distance to the subject.

9. The wearable electronic device of claim 7, further comprising:

a camera with an auto-focusing function,
wherein the processor is configured to determine the distance to the subject that is in focus using the auto-focusing function of the camera.

10. The wearable electronic device of claim 9, wherein the processor is configured to determine whether the subject is in focus using the pair of autofocus pixels, and to calculate the distance to the subject in response to the subject being in focus.

11. The wearable electronic device of claim 10, wherein, in response to determining that the subject not in focus, the processor scans surroundings by driving the pair of autofocus pixels, instead of driving a Tx light source configured to output a pulse laser.

12. The wearable electronic device of claim 8, wherein the processor is configured to:

adjust a transmission power of the Tx light source to a first power in response to the distance to the subject being equal to or less than a first distance;

adjust the transmission power of the Tx light source to a second power greater than the first power in response to the distance to the subject being greater than the first distance and equal to or less than a second distance greater than the first distance; and

adjust the transmission power of the Tx light source to a third power greater than the second power in response to the distance to the subject exceeding the second distance.

13. The wearable electronic device of claim 7, comprising:

at least one of smart glasses, and a head-mounted device (HMD) comprising an augmented reality (AR) device, a virtual reality (VR) device, and a mixed reality (MR) device.

14. The wearable electronic device of claim 7, wherein the processor is configured to adjust one or more attributes of the virtual content based on the distance to the subject.

15. The wearable electronic device of claim 14, wherein the one or more attributes comprise a color, a shape, a size, and an audio.

FIG. 1

EP 4 390 450 A1

FIG. 2

EP 4 390 450 A1

**310**

Fixed PWR

**320**

Short distance

**330**

Long distance

**FIG. 3**

FIG. 4

FIG. 5

FIG. 6

EP 4 390 450 A1

FIG. 7

Pixel shift

810

B(i)

A(i)

i : Pixel index

830

SSD

Pixel shift

D

835

FIG. 8

Short distance
Low power Tx PWR
910

Middle distance
Intermediate power Tx PWR
930

Long distance
High power Tx PWR
950

FIG. 9

1000

1010

1011

Rx sensor

1013

Tx light source

1005

1030

Processor

1050

Display device

1090

Camera

1070

Memory

FIG. 10

Start

Calculate distance to subject using autofocus pixels included in Rx sensor before Tx light source is driven ——1110

Adaptively determine transmission power of Tx light source based on distance to subject ——1120

Control Tx light source to output pulse laser according to transmission power ——1130

End

FIG. 11

## INTERNATIONAL SEARCH REPORT

| | International application No. |
|---|---|
| | **PCT/KR2022/015781** |

**A. CLASSIFICATION OF SUBJECT MATTER**

**G01S 7/484**(2006.01)i; **G01S 7/497**(2006.01)i; **G01S 17/86**(2020.01)i; **H04N 23/60**(2023.01)i; **G03B 13/20**(2006.01)i; **G03B 13/36**(2006.01)i; **G06F 1/16**(2006.01)i; **G02B 27/01**(2006.01)i

According to International Patent Classification (IPC) or to both national classification and IPC

**B. FIELDS SEARCHED**

Minimum documentation searched (classification system followed by classification symbols)

G01S 7/484(2006.01); G01C 3/06(2006.01); G01S 17/10(2006.01); G01S 17/89(2006.01); G02B 27/00(2006.01); H01S 5/022(2006.01); H01S 5/18(2006.01); H04N 5/374(2011.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 라이다(LIDAR), 오토포커스 픽셀(auto focus pixel), 거리(distance), 카메라 (camera), 웨어러블(wearable), 초점(focus), 컨텐츠(contents)

**C. DOCUMENTS CONSIDERED TO BE RELEVANT**

| Category* | Citation of document, with indication, where appropriate, of the relevant passages | Relevant to claim No. |
|---|---|---|
| Y | KR 10-2020-0117460 A (SAMSUNG ELECTRONICS CO., LTD.) 14 October 2020 (2020-10-14) See paragraphs [0039]-[0066] and [0154] and figures 1-4. | 1-15 |
| Y | KR 10-2020-0129022 A (SAMSUNG ELECTRONICS CO., LTD.) 17 November 2020 (2020-11-17) See paragraphs [0015]-[0024] and figures 1-3b. | 1-15 |
| Y | KR 10-2021-0053630 A (LG INNOTEK CO., LTD.) 12 May 2021 (2021-05-12) See paragraphs [0274] and [0277] and figure 9. | 2,9-11 |
| Y | KR 10-2016-0016540 A (SAMSUNG ELECTRONICS CO., LTD.) 15 February 2016 (2016-02-15) See paragraphs [0058] and [0349]-[0355] and figures 2-3 and 30. | 6-15 |
| A | JP 2019-049480 A (HITACHI-LG DATA STORAGE INC.) 28 March 2019 (2019-03-28) See claim 1 and figures 1-5. | 1-15 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **26 January 2023** | **26 January 2023** |

| Name and mailing address of the ISA/KR | Authorized officer |
|---|---|
| **Korean Intellectual Property Office** **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

| International application No. |
| --- |
| **PCT/KR2022/015781** |

| Patent document cited in search report | | | Publication date (day/month/year) | Patent family member(s) | | | Publication date (day/month/year) |
| --- | --- | --- | --- | --- | --- | --- | --- |
| KR | 10-2020-0117460 | A | 14 October 2020 | WO | 2020-204291 | A1 | 08 October 2020 |
| KR | 10-2020-0129022 | A | 17 November 2020 | CN | 111916468 | A | 10 November 2020 |
| | | | | US | 11381768 | B2 | 05 July 2022 |
| | | | | US | 2020-0358971 | A1 | 12 November 2020 |
| | | | | US | 2022-0337772 | A1 | 20 October 2022 |
| KR | 10-2021-0053630 | A | 12 May 2021 | | None | | |
| KR | 10-2016-0016540 | A | 15 February 2016 | CN | 105320279 | A | 10 February 2016 |
| | | | | CN | 105320279 | B | 14 August 2020 |
| | | | | CN | 111897425 | A | 06 November 2020 |
| | | | | EP | 2980627 | A1 | 03 February 2016 |
| | | | | KR | 10-2433291 | B1 | 17 August 2022 |
| | | | | TW | 201610472 | A | 16 March 2016 |
| | | | | TW | I670520 | B | 01 September 2019 |
| | | | | US | 10037084 | B2 | 31 July 2018 |
| | | | | US | 10452152 | B2 | 22 October 2019 |
| | | | | US | 10725556 | B2 | 28 July 2020 |
| | | | | US | 11150738 | B2 | 19 October 2021 |
| | | | | US | 2016-0034042 | A1 | 04 February 2016 |
| | | | | US | 2018-0314339 | A1 | 01 November 2018 |
| | | | | US | 2020-0042098 | A1 | 06 February 2020 |
| | | | | US | 2020-0356180 | A1 | 12 November 2020 |
| | | | | WO | 2016-017997 | A1 | 04 February 2016 |
| JP | 2019-049480 | A | 28 March 2019 | CN | 109490903 | A | 19 March 2019 |
| | | | | JP | 7021885 | B2 | 17 February 2022 |
| | | | | US | 10795004 | B2 | 06 October 2020 |
| | | | | US | 2019-0079170 | A1 | 14 March 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 2022015781 W

- KR 1020210142940